# EUROPÄISCHE PATENTANMELDUNG

(11) **EP 2 399 880 A1**
(43) Veröffentlichungstag der Anmeldung: **28.12.2011**
(21) Anmeldenummer: 10167553.6
(22) Anmeldetag: 28.06.2010
(51) Int. Cl.: C04B 35/573, C04B 35/80, F41H 5/00

(54) **Diskretierte Keramik mit multifunktionalem Eigenschaftsspektrum**

(71) Anmelder: SGL Carbon SE, 65203 Wiesbaden (DE)
(72) Erfinder: Benitsch, Bodo, 86647, Buttenwiesen (DE); Pfitzmaier, Eugen, 86672, Thierhaupten (DE)

(57) **Zusammenfassung**

Gegenstand der Erfindung ist eine multifunktionale Keramik, die von Fasern durchzogen wird, welche die Keramik diskretisieren, d.h. in endlich viele aber zusammenhängende Bereiche partitionieren.

## Beschreibung

Die Erfindung betrifft eine multifunktionale Keramik, die für zivile und militärische Einsatzgebiete geeignet ist. Die erfindungsgemäße multifunktionale Keramik wird von Fasern durchzogen, die die besagte Keramik diskretisieren, d.h. in endlich viele aber zusammenhängende Bereiche partitionieren.

Eine derartige diskretisierte Keramik lässt sich beispielsweise in ballistischen Schutzsystemen einsetzen. Bei diesen erfindungsgemäßen ballistischen Schutzsystemen spielen neben einem möglichst geringen Gewicht und einem hohen ballistischen Schutzniveau noch weitere, lokal definierbare, funktionale Eigenschaften eine Rolle. Die funktionalen Eigenschaften stammen bevorzugt aus dem Bereich der Sensorik, der Energiespeicherung, der Leitung von elektrischen oder thermischen Strömen, aus dem Bereich ballistischer Schutz (z.B. Multihit-Eigenschaften) oder aus Kombinationen hieraus.

Die Erfindung betrifft ferner ein Verfahren zur Herstellung der erfindungsgemäßen multifunktionalen Keramik.

Im zivilen Bereich, der sich u.a. auf den Personenschutz, gepanzerte Limousinen und Schutzwesten konzentriert, werden komplex geformte Teile verlangt. Dies ist gekoppelt mit der Forderung nach einer geringen Bauteildicke und geringem Gewicht.

Die Anforderungen zum Schutz gegen schwere Waffen bzw. mittlere und große Kaliber sind im zivilen Bereich überwiegend gering. Die Distanz zur Bedrohung ist allerdings meist recht kurz und liegt oft bei wenigen Metern. Dies führt beim häufig auftretenden Mehrfachbeschuss zu nahe beieinander liegenden Treffern. Daraus ergeben sich höchste Anforderungen an die Multihit-Tauglichkeit der Schutzpanzerung.

Ein klassischer ballistischer Werkstoff ist Stahl in spezifischen Legierungsformen. Diese Legierungen halten bei Trefferabständen von etwa drei Kalibern noch einem Mehrfachbeschuss stand. Der größte Nachteil derartiger Systeme ist das auf die ballistische Widerstandsklasse bezogene Flächengewicht von z.B. ca. 70 kg/m² für die Beschussklasse FB 7 (7,62 x 51 AP). Demgegenüber weisen keramische Werkstoffe bezogen auf die Dichte und das Flächengewicht eine höhere ballistische Schutzwirkung auf (ca. 35-45 kg/m²). Einem Mehrfachbeschuss (Multi-Hit) mit einem Trefferabstand von etwa drei Kalibern halten solche Schutzpanzerungen jedoch nicht stand, da im Allgemeinen eine völlige Zerstörung der jeweiligen Keramikplatten auftritt.

Wenn man diese Schutzpanzerungen aber aus einzelnen (kleinen) keramischen Segmenten, sogenannten Kacheln, aufbaut, wird bei einem Treffer nur die jeweils getroffene Kachel zerstört, das umliegende, durch den Spalt zwischen den benachbarten Kacheln entkoppelte System bleibt weitgehend unversehrt. Die zerstörte Fläche entspricht also nur der Ausdehnung der getroffenen Kachel.

Derartige aus einzelnen kachelförmigen Panzerungselementen zusammengesetzte Schutzpanzerungen sind beispielsweise aus DE 3940623 und DE 19834393 bekannt. Die Schutzpanzerung nach DE 3940623 besteht aus einzelnen Panzerungselementen, bevorzugt Keramikkacheln, die mittels eines Klebstoffs mit einer Schutzunterlage, beispielsweise einem Hochmodulwerkstoff aus Aramidfasern, verbunden sind.

Die Beschussfläche eines Panzerungselements nach diesem Stand der Technik ist zur Auftreffrichtung des Geschosses hin erhaben ausgebildet und fällt zu den Rändern des Panzerungselements hin ab. Beispielsweise ist die Beschussfläche aus Kugelflächenabschnitt oder als Pyramiden- oder Kegelmantelfläche ausgebildet. Dadurch wird ein auf das Panzerungselement auftreffendes Geschoss seitlich abgelenkt, seine Auftrefffläche vergrößert und die Durchschlagskraft herabgesetzt. Um das Werkstoffverhalten von Keramiken zu verbessern, wird in EP 0994084 die Verwendung von faserverstärktem SiC oder C/SiC (mit Kohlenstofffasern verstärktes SiC) vorgeschlagen. Der Formkörper besteht aus einem Gewebe, Gewirke, Gestricke oder dergleichen aus Kohlenstofffasern, das in einem Silicierungsvorgang durch Infiltration mit flüssigem Silicium zu kohlenstofffaserverstärktem Siliciumcarbid umgewandelt wird.

Die bekannten Verbundwerkstoffe weisen jedoch bezogen auf die gewünschte Dicke bzw. das Flächengewicht keine genügend hohe geschossbrechende Wirkung bei Hartkernprojektilen auf.

Zur Panzerung im militärischen Bereich werden häufig flache Platten als Zusatzpanzerung für Land- und Wasserfahrzeuge sowie für Helikopter, Container, Behälter und Unterstände bzw. Feldbefestigungen eingesetzt.

Die Auslegung dieser Panzerungen geht von einer Bedrohung durch Hochgeschwindigkeits- und großkalibrige Geschosse aus. Die großen Distanzen zu den Zielobjekten bedingen im Allgemeinen größere Trefferabstände.

Im militärischen sowie im zivilen Bereich besteht das Bedürfnis nach keramischen Werkstoffen, die neben einem geringen Gewicht und hohem ballistischen Schutzniveau weitere, lokal definierbare, funktionale Eigenschaften mit sich bringen.

Aufgabe der vorliegenden Erfindung ist es daher, eine Keramik mit funktionalen Eigenschaften zu erweitern und zusätzlich das Multi-Hit-Verhalten (Ertragbarkeit mehrerer Treffer mit geringem Trefferabstand) zu verbessern, d.h. die Schadensausbreitung sowie den ertragbaren Trefferabstand zu minimieren.

Gelöst wird diese Aufgabe durch geordnetes Einbringen und Einlagerung elektrisch und thermisch leitfähiger Fasern, vorzugsweise Kohlenstofffasern, in eine Keramik, bevorzugt aus C/SiC oder SiSiC, mit ballistischen Eigenschaften. Gegenstand der Erfindung ist eine multifunktionale Keramik, die von Fasern durchzogen wird, welche die Keramik diskretisieren, d.h. in endlich viele aber zusammenhängende Bereiche partitionieren.

Das erfindungsgemäße Einbringen der elektrisch leitfähigen Fasern geschieht hierbei vor der Aushärtung der keramischen Preform, d.h. beispielsweise bei der Herstellung von C/SiC, vor der Aushärtung der Pressmasse.

Besonders bevorzugt sind die Fasern der multifunktionalen Keramik teilweise oder vollständig vorrangig senkrecht zu der Fläche angeordnet, die durch die lateralen Abmessungen aufgespannt wird.

Vorzugsweise werden die Fasern ausgewählt aus der Gruppe der keramischen Fasern. Besonders bevorzugt ist es, dass die Fasern aus der Gruppe der Kohlenstofffasern ausgewählt sind.

Bevorzugt kommen die Fasern in Form von geometrischen Körpern in der Keramik zu liegen. Die geometrischen Körper bestehen beispielsweise aus Hohlzylindern, Rechtecken, Wellenprofilen, Quadraten, großflächigen Rastern, Wabenstrukturen oder anderen Vielecken oder einer Kombination derer oder Segmente daraus.

Die Fasern selbst können dabei beispielsweise zugeführt werden in Form von nebeneinander plazierten, zylindrischen, dünnwandigen Hohlstrukturen oder in Form von rechteckigen oder wabenförmigen, großflächigen Rastern auf Basis von Fasergeweben oder unidirektionalen, gegebenenfalls vernähten Gelegen.

Es ist bevorzugt, dass die Fasern der multifunktionalen Keramik eine Beschichtung oder funktionsbeeinflussende Beschichtung aufweisen.

Vorzugsweise besteht die Beschichtung oder die funktionsbeeinflussende Beschichtung auf der Basis von Kohlenstoff oder stammt aus dem Bereich der Boride, Carbide, Nitride oder Oxide.

Bevorzugt durchstoßen die Fasern die Oberfläche der multifunktionalen Keramik zumindest an einer Stelle.

Vorzugsweise transportieren die Fasern einen elektrischen und/oder thermischen Strom, von einem Ort der Oberfläche der Keramik, z.B. der ballistischen Bedrohung zugewandten Seite, zumindest teilweise durch diese hindurch zu einem anderen Ort der Oberfläche, z.B. zu einem Signal- oder Energieempfänger, auf der der Bedrohung abgewandten Seite der Keramik.

Die teilweise oder vollständige Durchgängigkeit der Fasern wird dabei dazu genutzt, die elektrische Leitfähigkeit in Dickenrichtung zu gewährleisten bzw. zu optimieren. Diese Optimierung kann vorzugsweise dahingehend ausgeprägt sein, dass nur lokale Bereiche der Keramik von thermischen und/oder elektrischen Strömen durchflossen werden, der Rest der Keramik davon jedoch unbeeinflusst bleibt. Dies ist bei den herkömmlichen Keramiken nicht gegeben, da über die klassische, planare oder wirre Faserverteilung der jeweilige Zustand nicht lokal begrenzbar bleibt.

Bevorzugt sind die aus Fasern bestehenden geometrischen Körper innerhalb der Keramik nebeneinander platziert angeordnet.

Vorzugsweise stellen die aus Fasern bestehenden geometrischen Körper der multifunktionalen Keramik dünnwandige Hohlstrukturen dar, die innen wiederum mit Keramik oder zum Teil mit Keramik gefüllt sind.

Die aus Fasern bestehenden geometrischen Körper sind vorzugsweise großflächig in die Keramik eingebracht.

Bevorzugt sind die aus Fasern bestehenden geometrischen Körper der multifunktionalen Keramik auf der Basis von Fasergeweben oder unidirektionalen, gegebenenfalls vernähten Gelegen aufgebaut.

Vorzugsweise teilt die Formgebung und Anordnung der aus Fasern bestehenden geometrischen Körper die Keramik in diskrete Bereiche auf.

Die Bindung zwischen den diskreten, keramischen Bereichen wird dabei so eingestellt, dass sich ein multi-hit fähiges Material ergibt.

Es ist besonders bevorzugt, dass die Bindung zwischen den diskreten keramischen Bereichen so gewählt ist, dass eine Rissausbreitung über diese diskreten Bereiche hinaus unterbunden oder weitgehend unterbunden wird.

Bevorzugt ist die Keramik durch die Diskretisierung schadenstolerant und erhält zusätzlich weitere funktionale Eigenschaften, wie sie hier in der Beschreibung offenbart sind.

Gegenstand der Erfindung ist ferner ein Verfahren zur Herstellung einer multifunktionalen Keramik, wobei in eine Mischung im Wesentlichen bestehend aus einem Binder sowie gegebenenfalls Kohlenstoff und gegebenenfalls keramischen Fasern (darunter sind auch Kohlenstofffasern zu verstehen) und keramischen Additiven, vorzugsweise gerichtete Fasern in Form von geometrischen Körpern eingebracht werden und anschließend die Aushärtung des Binders erfolgt.

Gegenstand der Erfindung ist auch ein Verfahren zur Herstellung einer multifunktionalen Keramik, wobei eine Mischung, im wesentlichen bestehend aus einem Binder sowie gegebenenfalls Kohlenstoff und gegebenenfalls keramischen Fasern (darunter sind auch Kohlenstofffasern zu verstehen) und keramischen Additiven, in die Hohlräume verbracht wird, welche von geometrischen Körpern bestehend aus Fasern ,vorzugsweise aus gerichteten Fasern, erzeugt werden mit anschließender Aushärtung der Mischung.

Bei den erfindungsgemäßen Verfahren zur Herstellung einer multifunktionalen Keramik erfolgt die Keramisierung bevorzugt über einen Reaktionsinterprozess oder bevorzugt durch Infiltration.

Die multifunktionale Keramik der vorliegenden Erfindung wird im Bereich der Sensorik, der Energiespeicherung, der Leitung von elektrischen oder thermischen Strömen, im Bereich ballistischer Schutz oder in Kombinationen hieraus verwendet.

Die Erfindung wird im folgenden anhand einer Zeichnung beispielhaft beschrieben.

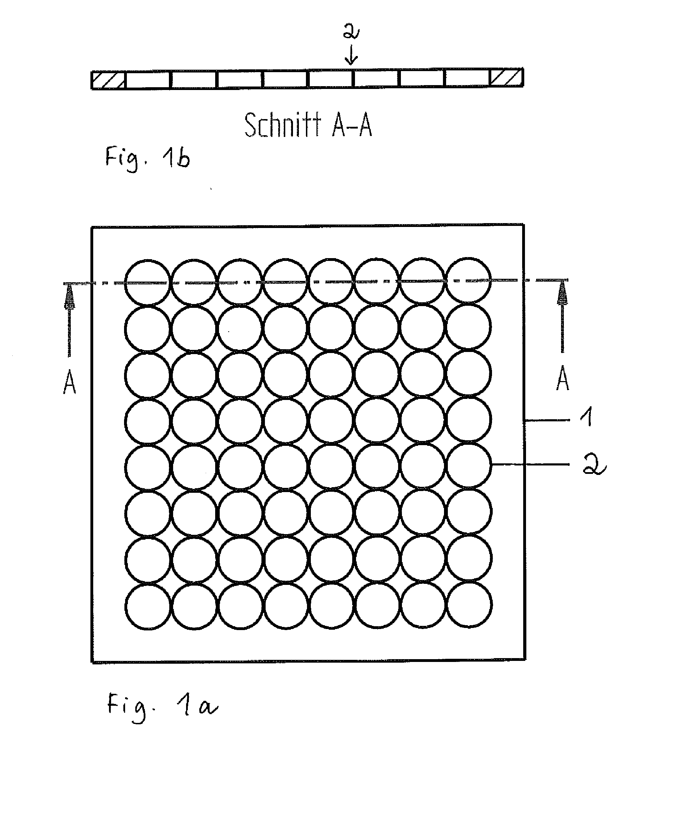

Man erkennt in der Figur 1a, dass geometrische Körper aus Fasern (2) in Form von Kreisflächen in ballistisch linearer nicht versetzter Anordnung in eine multifunktionelle Keramik (1) eingebracht sind, welche diese diskretisieren.

Die Fasern (2) kommen in Form von sich wiederholenden geometrischen Flächengebilden in der Keramik zu liegen. In die multifunktionelle Keramik (1) sind elektrisch und thermisch leitfähige Fasern eingelagert (nicht dargestellt). Die Fasern (2) sind im vorliegenden Beispiel Kohlenstofffasern und die multifunktionelle Keramik (1) besteht aus C/SiC oder SiSiC. Die kreisförmigen Formkörper können aus einem Gewebe, Gewirke, Gestricke bestehen. Im vorliegenden Fall sind sie als Gewebe ausgebildet.

In Figur 1b ist der Schnitt A-A abgebildet, wobei die Fasern (2) senkrecht zu der Fläche, die durch die lateralen Abmessungen aufgespannt sind, angeordnet sind. Die Fasern (2) weisen eine Beschichtung oder funktionsbeeinflussende Beschichtung auf (nicht dargestellt).

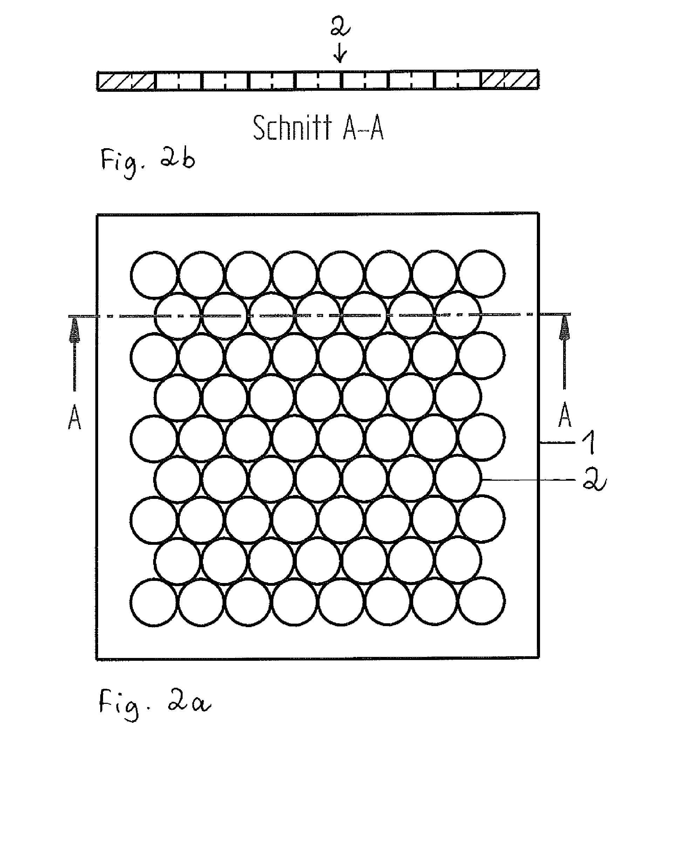

Man erkennt in der Figur 2a, dass geometrische Körper aus Fasern (2) in Form von Kreisflächen in ballistisch diagonaler versetzter Anordnung in eine multifunktionelle Keramik (1) eingebracht sind, welche diese diskretisieren. Die Fasern (2) kommen in Form von sich wiederholenden geometrischen Flächengebilden in der Keramik zu liegen. In die multifunktionelle Keramik (1) sind elektrisch und thermisch leitfähige Fasern eingelagert (nicht dargestellt). Die Fasern (2) sind im vorliegenden Beispiel Kohlenstofffasern und die multifunktionelle Keramik (1) besteht aus C/SiC oder SiSiC. Die kreisförmigen Formkörper können aus einem Gewebe, Gewirke, Gestricke bestehen. Im vorliegenden Fall sind sie als Gewebe ausgebildet.

In Figur 2b ist der Schnitt A-A abgebildet, wobei die Fasern (1) vorrangig senkrecht zu der Fläche, die durch die lateralen Abmessungen aufgespannt sind, versetzt angeordnet sind. Die Fasern (1) weisen eine Beschichtung oder funktionsbeeinflussende Beschichtung auf (nicht dargestellt).

## Patentansprüche

1. Multifunktionale Keramik **dadurch gekennzeichnet, dass** diese von Fasern durchzogen wird, welche die Keramik diskretisieren.

2. Multifunktionale Keramik nach Anspruch 1 **dadurch gekennzeichnet, dass** die Fasern teilweise oder vollständig vorrangig senkrecht zu der Fläche, die durch die lateralen Abmessungen aufgespannt wird, angeordnet sind.

3. Multifunktionale Keramik nach einem oder mehrerer der Ansprüche 1 und 2 **dadurch gekennzeichnet, dass** die Fasern aus der Gruppe der keramischen Fasern ausgewählt werden.

4. Multifunktionale Keramik nach einem oder mehrerer der Ansprüche 1 bis 3 **dadurch gekennzeichnet, dass** die Fasern aus der Gruppe der Kohlenstofffasern ausgewählt sind.

5. Multifunktionale Keramik nach einem oder mehrerer der Ansprüche 1 bis 4 **dadurch gekennzeichnet, dass** die Fasern in Form von geometrischen Körpern, oder sich wiederholenden geometrischen Flächengebilden, in der Keramik zu liegen kommen.

6. Multifunktionale Keramik nach einem oder mehrerer der Ansprüche 1 bis 5 **dadurch gekennzeichnet, dass** die Fasern eine Beschichtung oder funktionsbeeinflussende Beschichtung aufweisen.

7. Multifunktionale Keramik nach Anspruch 6 **dadurch gekennzeichnet, dass** die Beschichtung oder funktionsbeeinflussende Beschichtung auf der Basis von Kohlenstoff besteht oder aus dem Bereich der Boride, Carbide, Nitride oder Oxide stammt.

8. Multifunktionale Keramik nach einem oder mehrerer der Ansprüche 1 bis 7 **dadurch gekennzeichnet, dass** die Fasern die Oberfläche der Keramik zumindest an einer Stelle durchstoßen.

9. Multifunktionale Keramik nach Anspruch 8 **dadurch gekennzeichnet, dass** die Fasern einen elektrischen und/oder thermischen Strom, von einem Ort der Oberfläche der Keramik zumindest teilweise durch diese hindurch zu einem anderen Ort der Oberfläche, auf der der Bedrohung abgewandten Seite der Keramik, transportieren.

10. Multifunktionale Keramik nach Anspruch 5 **dadurch gekennzeichnet, dass** die aus Fasern bestehenden geometrischen Körper innerhalb der Keramik nebeneinander platziert angeordnet sind.

11. Multifunktionale Keramik nach einem oder mehrerer der Ansprüche 5 und 10 **dadurch gekennzeichnet, dass** die aus Fasern bestehenden geometrischen Körper dünnwandige Hohlstrukturen darstellen, die innen wiederum mit Keramik oder zum Teil mit Keramik gefüllt sind.

12. Multifunktionale Keramik nach einem oder mehrerer der Ansprüche 5, 10 und 11 **dadurch gekennzeichnet, dass** die aus Fasern bestehenden geometrischen Körper großflächig in die Keramik eingebracht sind.

13. Multifunktionale Keramik nach einem oder mehrerer der Ansprüche 5, 10, 11 und 12 **dadurch gekennzeichnet, dass** die aus Fasern bestehenden geometrischen Körper auf der Basis von Fasergeweben oder unidirektionalen Gelegen aufgebaut sind.

14. Multifunktionale Keramik nach einem der vorhergehenden Ansprüche, **dadurch gekennzeichnet, dass** die Formgebung und Anordnung der aus Fasern bestehenden geometrischen Körper die Keramik in diskrete Bereiche aufteilt.

15. Multifunktionale Keramik nach Anspruch 14 **dadurch gekennzeichnet, dass** die Bindung zwischen den diskreten keramischen Bereichen so gewählt ist, dass eine Rissausbreitung über diese diskreten Bereiche hinaus unterbunden oder weitgehend unterbunden wird.

16. Multifunktionale Keramik nach einem oder mehrerer der Ansprüche 1 bis 15 **dadurch gekennzeichnet, dass** die Keramik durch die Diskretisierung schadenstolerant ist und gleichzeitig weitere Funktionen gemäß einem oder mehrerer der Ansprüche 1 bis 15 ausüben kann.

17. Verfahren zur Herstellung einer multifunktionalen Keramik **dadurch gekennzeichnet, dass** in eine Mischung im wesentlichen bestehend aus einem Binder sowie gegebenenfalls Kohlenstoff und gegebenenfalls keramischen Fasern (darunter sind auch Kohlenstofffasern zu verstehen) und keramischen Additiven, vorzugsweise gerichtete Fasern in Form von geometrischen Körpern eingebracht werden und anschließend die Aushärtung des Binders erfolgt.

18. Verfahren zur Herstellung einer multifunktionalen Keramik **dadurch gekennzeichnet, dass** eine Mischung, im wesentlichen bestehend aus einem Binder sowie gegebenenfalls Kohlenstoff und gegebenenfalls keramischen Fasern (darunter sind auch Kohlenstofffasern zu verstehen) und keramischen Additiven, in die Hohlräume verbracht wird, welche von geometrischen Körpern bestehend aus Fasern, vorzugsweise gerichteten Fasern, erzeugt werden mit anschließender Aushärtung der Mischung.

19. Verfahren zur Herstellung einer multifunktionalen Keramik nach einem oder mehrerer der Ansprüche 17 und 18 **dadurch gekennzeichnet, dass** die Keramisierung über einen Reaktionsinterprozess oder durch Infiltration erfolgt.

20. Verwendung einer multifunktionalen Keramik nach einem oder mehrerer der Ansprüche 1 bis 19 im Bereich der Sensorik, der Energiespeicherung, der Leitung von elektrischen oder thermischen Strömen, im Bereich ballistischer Schutz oder in Kombinationen hieraus.
